# EUROPEAN PATENT APPLICATION

(11) **EP 2 701 369 A1**
(43) Date of publication of application: **26.02.2014**
(21) Application number: 13782521.2
(22) Date of filing: 19.04.2013
(51) Int. Cl.: H04M 1/12

(54) **MOBILE DEVICE AND BRACKET THEREOF**

(30) Priority: 28.04.2012 CN 201220193065 U
(71) Applicant: Huawei Device Co., Ltd., Longgang District Shenzhen Guangdong 518129 (CN)
(72) Inventor: LIANG, Daixi, Shenzhen Guangdong 518129 (CN)
(74) Representative: Körber, Martin Hans
(86) International application number: PCT/CN2013/074397
(87) International publication number: WO 2013/159674

(57) **Abstract**

A mobile device and a support of the mobile device are disclosed in the present invention, which relate to the field of design and manufacturing of mobile devices, so as to integrate a support into the mobile device itself. The support is a retractable pull rod, where a tail end of the retractable pull rod is configured to be fixedly set in the mobile device, and at least one rotating shaft is set on the retractable pull rod. After the retractable pull rod is bent through the rotating shaft in a fully stretched or partially stretched state, at least one of all supporting points of the retractable pull rod is configured to contact the mobile device, and at least another one of the supporting points is configured to contact a surface on which the mobile device is placed. All the supporting points of the retractable pull rod include a head end of the retractable pull rod and all rotating shafts set on the retractable pull rod. The solutions provided by the present invention are applicable to the design and manufacturing of mobile devices.

## Description

This application claims priority to Chinese Patent Application No. CN 201220193065.9, filed with the Chinese Patent Office on April 28, 2012 and entitled "Mobile device and support of mobile device ", which is incorporated herein by reference in its entirety.

### TECHNICAL FIELD

The present invention relates to the field of design and manufacturing of mobile devices, and in particular, to a mobile device and a support of the mobile device.

### BACKGROUND

CMMB cell phone television is a portable mobile multimedia broadcasting television product generated by using a CMMB (China Mobile Multimedia Broadcasting, China mobile multimedia broadcasting) technology, and its marketing name is "cell phone television". With the development of a 3G service, the cell phone television becomes a new function of a cell phone, and gradually becomes a standard configuration function of high-end and mid-range mobile phones. Currently, all CMMB products are referred to as "handheld television", including communication terminal products, that is, "cell phone television", and also including other non-communication terminal products.

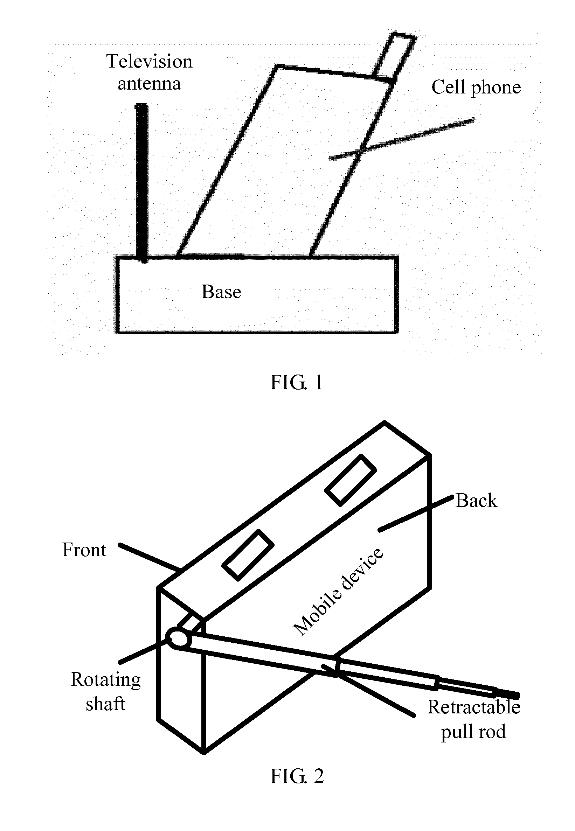

Currently, there are two kinds of cell phones having a cell phone television function. For the first kind, a cell phone itself has an antenna to receive a cell phone television signal, and for the second kind, a cell phone is set with an antenna contact head and receives a cell phone television signal through an antenna on a cell phone base. When the cell phone television function of the second kind of cell phone is used, as shown in FIG. 1, a body of the base is set with an antenna and a groove for a cell phone to be placed in. A side wall of the groove has an antenna contact point electrically connecting to the antenna, and the antenna contact point can contact an antenna contact head of the cell phone and is used for transmitting, to the cell phone, a cell phone television signal received by the antenna.

For a mobile device, according to the solutions in the prior art, in a process of using the cell phone television function, a user needs to hold the cell phone in hand or take the base along for convenience in viewing. However, holding the cell phone in hand lowers a comfort degree of the user, and it is inconvenient to take the base along, thereby resulting in poor user experience.

### SUMMARY

Embodiments of the present invention provide a mobile device and a support of the mobile device, so as to integrate a support into the mobile device itself, thereby enhancing user experience.

To achieve the foregoing objective, in an aspect, the present invention provides a support. The support is a retractable pull rod, where a tail end of the retractable pull rod is configured to be fixedly set in a mobile device, and at least one rotating shaft is set on the retractable pull rod. After the retractable pull rod is bent through the rotating shaft in a fully stretched or partially stretched state, at least one of all supporting points of the retractable pull rod is configured to contact the mobile device, and at least another one of the supporting points is configured to contact a surface on which the mobile device is placed. All the supporting points of the retractable pull rod include a head end of the retractable pull rod and all rotating shafts set on the retractable pull rod.

Specifically, the rotating shaft is a 360-degree rotating shaft.

Specifically, in a fully retracted state, the head end of the retractable pull rod is placed outside a shell of the mobile device, and the remaining part is placed inside the shell of the mobile device.

Specifically, that the at least one of all the supporting points of the retractable pull rod is configured to contact the mobile device includes that the at least one of all the supporting points of the retractable pull rod is configured to prop a recess of the mobile device.

Specifically, the retractable pull rod is an antenna of the mobile device.

In another aspect, the present invention provides a mobile device. The mobile device includes a retractable pull rod, where a tail end of the retractable pull rod is fixedly set in the mobile device, and at least one rotating shaft is set on the retractable pull rod. After the retractable pull rod is bent through the rotating shaft in a fully stretched or partially stretched state, at least one of all supporting points of the retractable pull rod is configured to contact the mobile device, and at least another one of the supporting points is configured to contact a surface on which the mobile device is placed. All the supporting points of the retractable pull rod include a head end of the retractable pull rod and all rotating shafts set on the retractable pull rod.

Specifically, the rotating shaft is a 360-degree rotating shaft.

Specifically, in a fully retracted state, the head end of the retractable pull rod is placed outside a shell of the mobile device, and the remaining part is placed inside the shell of the mobile device.

Specifically, a recess is set on the mobile device, and that the at least one of all the supporting points of the retractable pull rod is configured to contact the mobile device includes that the at least one of all the supporting points of the retractable pull rod is configured to prop the recess of the mobile device.

Specifically, the retractable pull rod is an antenna of the mobile device.

In the mobile device and the support of the mobile device which are provided by the present invention, the retractable pull rod is used for making the support of the mobile device, and the rotating shaft is set on the retractable pull rod, so that the retractable pull rod can be bent into a certain shape to support the mobile device. Because a structure capable of serving as a support is set in the mobile device itself, the mobile device is convenient for a user to use, thereby enhancing user experience.

### BRIEF DESCRIPTION OF DRAWINGS

To describe the technical solutions in the embodiments of the present invention or in the prior art more clearly, the following briefly introduces accompanying drawings for describing the embodiments or the prior art. Apparently, the accompanying drawings in the following description show merely some embodiments of the present invention, and persons of ordinary skill in the art may still derive other drawings from the accompanying drawings without creative efforts.
FIG. 1 is a schematic structural diagram showing a cell phone plugged in a base provide by the prior art;
FIG. 2 is a schematic diagram of a support of a mobile device provided by the present invention;
FIG. 3 is a schematic diagram of another support of a mobile device provided by the present invention; and
FIG. 4 is a schematic diagram of yet another support of a mobile device provided by the present invention.

### DESCRIPTION OF EMBODIMENTS

The following clearly and completely describes the technical solutions of the present invention with reference to the accompanying drawings. Apparently, the described embodiments are only a part rather than all of the embodiments of the present invention. All other embodiments obtained by persons of ordinary skill in the art based on the embodiments of the present invention without creative efforts shall fall within the protection scope of the present invention.

An embodiment of the present invention provides a support. The support is a retractable pull rod, where a tail end of the retractable pull rod is configured to be fixedly set in a mobile device, and at least one rotating shaft is set on the retractable pull rod. After the retractable pull rod is bent through the rotating shaft in a fully stretched or partially stretched state, at least one of all supporting points of the retractable pull rod is configured to contact the mobile device, and at least another one of the supporting points is configured to contact a surface on which the mobile device is placed. All the supporting points of the retractable pull rod include a head end of the retractable pull rod and all rotating shafts set on the retractable pull rod.

The at least another one of the supporting points refers to at least one supporting point, except the supporting point configured to contact the mobile device, in all the supporting points of the retractable pull rod.

The rotating shaft is configured to bend the retractable pull rod into any shape having an effect of supporting the mobile device.

In the present invention, the mobile device refers to a portable mobile electronic device. For example, the mobile device may be a smart phone, a personal digital assistant, a portable game player, an MP4 and so on. The rotating shaft in the present invention refers to a part that can bend the retractable pull rod, and is indicated by a small circle in the drawings.

For clarity of description, two ends of the retractable pull rod are referred to as the tail end and the head end. An end fixedly set in the mobile device is the tail end, and the other end is the head end. A user may stretch or retract the retractable pull rod by holding the head end of the pull rod in hand, so that the retractable pull rod is in a fully stretched state, a partially stretched state (also referred to as a partially retracted state), or a fully retracted state.

In addition, a shape of the retractable pull rod bent through the rotating shaft in the fully stretched or partially stretched state may be any shape that can support the mobile device. For example, FIG. 2 shows a schematic diagram of a bent retractable pull rod having one rotating shaft. The retractable pull rod is rotated through the rotating shaft to the back of a mobile device, and forms a certain angle with the back of the mobile device. That is to say, in FIG. 2, the rotating shaft of the retractable pull rod contacts the mobile device, and a head end of the retractable pull rod contacts a surface on which the mobile device is placed. In this way, the mobile device not only can be supported by the retractable pull rod, but also the angle can be adjusted so that the mobile device can be supported by the retractable pull rod within a viewing angle demanded by the user.

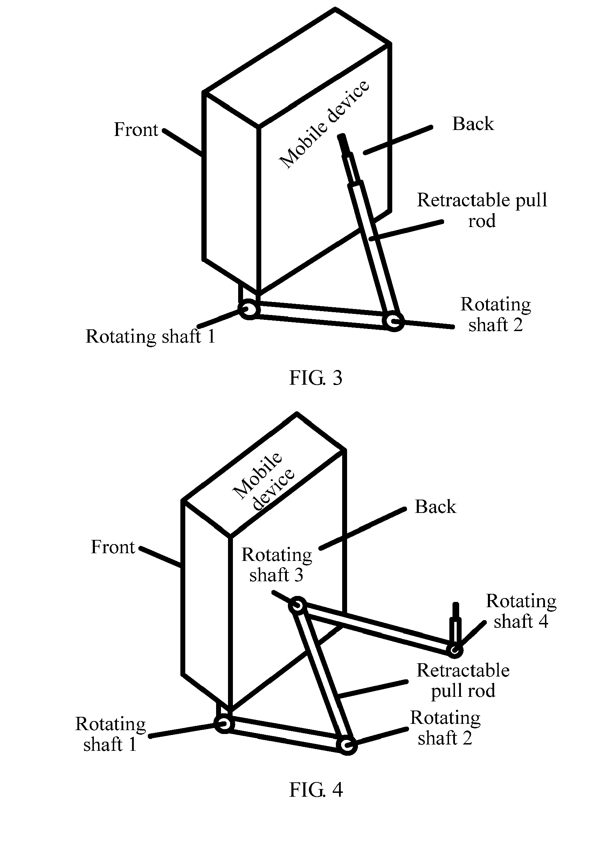

FIG. 3 shows a schematic diagram of a bent retractable pull rod having two rotating shafts. The retractable pull rod is rotated to the back of a mobile device through a rotating shaft 1. Further, the remaining part of the pull rod is bent through a rotating shaft 2, so that a head end of the retractable pull rod props the back of the mobile device, thereby forming a support to support the mobile device. That is to say, in FIG. 3, the head end of the retractable pull rod contacts the mobile device, and the rotating shaft 1 and the rotating shaft 2 of the retractable pull rod contact a surface on which the mobile device is placed. Because this support has three supporting points, that is, the rotating shafts 1 and 2 and the head end of the retractable pull rod, the support may be referred to as a triangular support. In addition, the position of a section of the retractable pull rod between the rotating shaft 1 and the rotating shaft 2 may be adjusted through the rotating shaft 1, and the position of a section of the retractable pull rod between the rotating shaft 2 and the head end of the retractable pull rod may also be adjusted through the rotating shaft 2, so that the mobile device can be supported by the retractable pull rod within a viewing angle demanded by the user.

FIG. 4 is a schematic diagram of a bent retractable pull rod having four rotating shafts. The retractable pull rod is rotated to the back of a mobile device through a rotating shaft 1, the retractable pull rod is bent through a rotating shaft 2, so that a rotating shaft 3 props the back of the mobile device, a rotating shaft 4 of the retractable pull rod props, through the rotating shaft 3, a surface on which the mobile device is placed, and the remaining part of the retractable pull rod is bent through the rotating shaft 4. That is to say, in FIG. 4, the rotating shaft 3 of the retractable pull rod contacts the mobile device, and the rotating shaft 1, the rotating shaft 2, and the rotating shaft 4 of the retractable pull rod contact the surface on which the mobile device is placed. The retractable pull rod is supported through the rotating shaft 2 and the rotating shaft 4 on a plane on which the mobile device is placed, and supports the back of the mobile device through the rotating shaft 3, so that the retractable pull rod is used as a support of the mobile device. In addition, in this way, positions of sections of the retractable pull rod can be adjusted through the rotating shafts, so that the mobile device can be supported by the retractable pull rod within a viewing angle demanded by the user.

Because the retractable pull rod can be bent into many shapes having an effect of supporting the mobile device, which cannot be described one by one herein in detail, the foregoing examples are only listed for reference. However, the foregoing examples are not taken as a limitation on a shape into which the retractable pull rod can be bent in the present invention.

In the support provided by the present invention, the retractable pull rod is used for making the support of the mobile device, and the rotating shaft is set on the retractable pull rod, so that the retractable pull rod can be bent into a certain shape to support the mobile device. Because a structure capable of serving as a support is set in the mobile device itself, the mobile device is convenient for a user to use, thereby enhancing user experience.

Preferably, the rotating shaft is a 360-degree rotating shaft. It should be noted that the 360-degree rotating shaft may preferably enable either section connected to the rotating shaft to rotate around the rotating shaft by 360 degrees on any plane. In this way, a bent shape and angle of the retractable pull rod can be adjusted according to different viewing angles demanded by the user, so as to meet a user demand.

For a pleasing appearance of the mobile device, preferably, when the retractable pull rod is in the fully retracted state, its head end is placed outside a shell of the mobile device, and the remaining part is placed inside the shell of the mobile device. In this way, when the support does not need to be used, a user conceals the retractable pull rod in the mobile device, and when the mobile device needs to be supported, the user may pull out the retractable pull rod concealed in the shell of the mobile device and bend the pull rod into a certain shape through the rotating shaft on the retractable pull rod, so that the retractable pull rod supports the back of the mobile device, thereby implementing a function of a support.

Further, to enable the retractable pull rod to produce a firmer supporting effect, that the at least one of all the supporting points of the retractable pull rod is configured to contact the mobile device includes that the at least one of all the supporting points of the retractable pull rod is configured to prop a recess of the mobile device.

The recess of the mobile device may be specially set on the mobile device for implementing a firm support. Some recesses in an existing design may also be used. For example, some manufacturers set a trade mark on a back shell of the mobile device by using characters in a convex font, and a recess exists between these characters in a convex font. For another example, a hole used for hanging an ornament is generally set on a side of the mobile device, and such a hole may also serve as a recess.

For a mobile device set with an antenna, preferably, the retractable pull rod is the antenna of the mobile device. That is to say, the antenna of the mobile device is made into a structure of any one of the foregoing retractable pull rods. For example, for a cell phone having a cell phone television function, a CMMB antenna set on the cell phone may be made into a structure of any one of the foregoing retractable pull rods having a rotating shaft. In this way, the antenna is used as the support, and an additional support does not need to be set on the mobile device, thereby optimizing a spatial structure of the mobile device. Definitely, the antenna is not limited to the CMMB antenna, and any external antenna of an mobile device is acceptable. For example, the antenna may also be an external FM antenna (a frequency modulation radio antenna).

When an antenna is used as the support of the mobile device, preferably, at least two rotating shafts is set on the antenna, so that a rotating shaft close to a head end of the antenna may bend the head end of the antenna out. For example, referring to FIG. 4, the head end of the antenna is bent out through the rotating shaft 4. In this way, the head end of the antenna does not need to serve as a supporting point to prop the back of the mobile device or a plane on which the mobile device is placed, thereby ensuring that the antenna receives a signal very well.

The present invention further provides a mobile device. The mobile device includes a retractable pull rod, where a tail end of the retractable pull rod is fixedly set in the mobile device, and at least one rotating shaft is set on the retractable pull rod. After the retractable pull rod is bent through the rotating shaft in a fully stretched or partially stretched state, at least one of all supporting points of the retractable pull rod is configured to contact the mobile device, and at least another one of the supporting points is configured to contact a surface on which the mobile device is placed. All the supporting points of the retractable pull rod include a head end of the retractable pull rod and all rotating shafts set on the retractable pull rod.

The at least another one of the supporting points refers to at least one supporting point, except the supporting point configured to contact the mobile device, in all the supporting points of the retractable pull rod.

The rotating shaft is configured to bend the retractable pull rod into a shape having an effect of supporting the mobile device.

In the present invention, the mobile device refers to a portable mobile electronic device. For example, the mobile device may be a smart phone, a personal digital assistant, a portable game player, an MP4 and so on. The rotating shaft in the present invention refers to a part that can bend the retractable pull rod, and is indicated by a small circle in the drawings.

For clarity of description, two ends of the retractable pull rod are referred to as the tail end and the head end respectively. An end fixedly set in the mobile device is the tail end, and the other end is the head end. A user may stretch or retract the retractable pull rod by holding the head end of the pull rod in hand, so that the retractable pull rod is in a fully stretched state, a partially stretched state (also referred to as a partially retracted state), or a fully retracted state.

In addition, a shape of the retractable pull rod bent through the rotating shaft in the fully stretched or partially stretched state may be any shape that can support the mobile device. For example, as shown in FIG. 2, FIG. 3, and FIG. 4, specific and detailed description is described above, and is not described herein again.

Because the retractable pull rod can be bent into many shapes having the effect of supporting the mobile device, which cannot be described one by one herein in detail, the foregoing examples are only listed for reference. However, the foregoing examples is not taken as a limit to the shape into which the retractable pull rod can be bent in the present invention.

In the mobile device provided by the present invention, the retractable pull rod is used for making a support of the mobile device, and the rotating shaft is set on the retractable pull rod, so that the retractable pull rod can be bent into a certain shape to support the mobile device. Because a structure capable of serving as a support is set in the mobile device itself, the mobile device is convenient for a user to use, thereby enhancing user experience.

Preferably, the rotating shaft is a 360-degree rotating shaft. In this way, a bent shape and angle of the retractable pull rod can be adjusted according to different viewing angles demanded by the user, so as to meet a user demand.

For a pleasing appearance of the mobile device, preferably, when the retractable pull rod is in the fully retracted state, its head end is placed outside a shell of the mobile device, and the remaining part is placed inside the shell of the mobile device. In this way, when the support does not need to be used, the user conceals the retractable pull rod in the mobile device, and when the mobile device needs to be supported, the user may pull out the retractable pull rod concealed in the shell of the mobile device and bend the pull rod into a certain shape through the rotating shaft on the retractable pull rod, so that the retractable pull rod supports the back of the mobile device, thereby implementing a function of a support.

Further, to enable the retractable pull rod to produce a firmer supporting effect, a recess is set on the mobile device. At this time, that the at least one of all the supporting points of the retractable pull rod is configured to contact the mobile device includes that the at least one of all the supporting points of the retractable pull rod is configured to prop the recess of the mobile device.

The recess of the mobile device may be specially set on the mobile device for implementing firm support. Some recesses in an existing design may also be used. For example, some manufacturers set a trade mark on a back shell of the mobile device by using characters in a convex font, and a recess exists between these characters in a convex font. For another example, a hole used for hanging an ornament is generally set on a side of the mobile device, and such a hole may also serve as a recess.

For a mobile device set with an antenna, preferably, the retractable pull rod is the antenna of the mobile device. That is to say, the antenna of the mobile device is made into a structure of any one of the foregoing retractable pull rods. For example, for a cell phone having a cell phone television function, a CMMB antenna set on the cell phone may be made into a structure of any one of the foregoing retractable pull rods having a rotating shaft. In this way, the antenna is used as the support, and an additional support does not need to be set on the mobile device, thereby optimizing a spatial structure of the mobile device. Definitely, the antenna is not limited to the CMMB antenna, and any external antenna of an mobile device is acceptable. For example, the antenna may also be an external FM antenna (a frequency modulation radio antenna).

When an antenna is used as the support of the mobile device, preferably, at least two rotating shafts is set on the antenna, so that a rotating shaft close to a head end of the antenna may bend the head end of the antenna out. For example, referring to FIG. 4, the head end of the antenna is bent out through the rotating shaft 4. In this way, the head end of the antenna does not need to serve as a supporting point to prop the back of the mobile device or a plane on which the mobile device is placed, thereby ensuring that the antenna receives a signal very well.

The foregoing descriptions are merely exemplary embodiments of the present invention, but are not intended to limit the protection scope of the present invention. Any variation, equivalent replacement, or improvement made by persons skilled in the art within the disclosed technical scope of the present invention should fall within the protection scope of the present invention. Therefore, the protection scope of the present invention shall be subject to the protection scope claimed by the claims.

## Claims

1. A support, wherein the support is a retractable pull rod, a tail end of the retractable pull rod is configured to be fixedly set in a mobile device, at least one rotating shaft is set on the retractable pull rod, and after the retractable pull rod is bent through the rotating shaft in a fully stretched or partially stretched state, at least one of all supporting points of the retractable pull rod is configured to contact the mobile device, and at least another one of the supporting points is configured to contact a surface on which the mobile device is placed, wherein all the supporting points of the retractable pull rod comprise a head end of the retractable pull rod and all rotating shafts set on the retractable pull rod.

2. The support according to claim 1, wherein the rotating shaft is a 360-degree rotating shaft.

3. The support according to claim 1 or 2, wherein in a fully retracted state, the head end of the retractable pull rod is placed outside a shell of the mobile device, and the remaining part is placed inside the shell of the mobile device.

4. The support according to any one of claims 1 to 3, wherein that the at least one of all the supporting points of the retractable pull rod is configured to contact the mobile device comprises that
the at least one of all the supporting points of the retractable pull rod is configured to prop a recess of the mobile device.

5. The support according to any one of claims 1 to 4, wherein the retractable pull rod is an antenna of the mobile device.

6. A mobile device, wherein the mobile device comprises a retractable pull rod, a tail end of the retractable pull rod is fixedly set in the mobile device, at least one rotating shaft is set on the retractable pull rod, and after the retractable pull rod is bent through the rotating shaft in a fully stretched or partially stretched state, at least one of all supporting points of the retractable pull rod is configured to contact the mobile device, and at least another one of the supporting points is configured to contact a surface on which the mobile device is placed, wherein all the supporting points of the retractable pull rod comprise a head end of the retractable pull rod and all rotating shafts set on the retractable pull rod.

7. The mobile device according to claim 6, wherein the rotating shaft is a 360-degree rotating shaft.

8. The mobile device according to claim 6 or 7, wherein in a fully retracted state, the head end of the retractable pull rod is placed outside a shell of the mobile device, and the remaining part is placed inside the shell of the mobile device.

9. The mobile device according to any one of claims 6 to 8, wherein a recess is set on the mobile device, and
that the at least one of all the supporting points of the retractable pull rod is configured to contact the mobile device comprises that
the at least one of all the supporting points of the retractable pull rod is configured to prop the recess of the mobile device.

10. The mobile device according to any one of claims 6 to 9, wherein the retractable pull rod is an antenna of the mobile device.
